Europäisches Patentamt

(19) European Patent Office

Office européen des brevets

(11) Publication number: **0 087 742**
**A2**

## (12) EUROPEAN PATENT APPLICATION

(21) Application number: 83101738.9

(22) Date of filing: 23.02.83

(51) Int. Cl.³: **F 16 H 57/12**
F 16 H 1/32, F 16 H 25/04

(30) Priority: 25.02.82 US 352121

(43) Date of publication of application:
07.09.83 Bulletin 83/36

(84) Designated Contracting States:
AT BE CH DE FR GB IT LI LU NL SE

(71) Applicant: Pierrat, Michel A.
48 Farrwood Drive
Andover Massachusetts 01810(US)

(72) Inventor: Pierrat, Michel A.
48 Farrwood Drive
Andover Massachusetts 01810(US)

(74) Representative: Strasse, Joachim
Strasse & Stoffregen, Patentanwälte
Zweibrückenstrasse 15
D-8000 München 2(DE)

(54) Speed reducer with anti-backlash bearing.

(57) A two-stage speed reducer of the type making use of
cycloidal cams particularly for motion control applications
where the elimination of backlash is important. The two
stages include sections that are rotatable with respect to
each other and any axial or radial movement between the
two stages would be a source of backlash. A first annular
bearing surface is provided on one stage having V-shaped
cross section with the apex of the V directed outwardly. The
other stage carries a second similar V-shaped bearing
surface in face-to-face relationship with the first bearing
surface. Anti-friction means, such as a layer of teflon, is
interposed between the two bearing surfaces. Means are
provided to apply a preload to the bearing surfaces while
limiting the minimum clearance between the surfaces. The
resulting bearing is resistant to axial, radial and bending
loads and eliminates an important source of backlash
enabling the speed reducer to be used for precision motion
control applications.

Fig. 1

SPEED REDUCER WITH ANTI-BACKLASH BEARING

Cross Reference to Related Applications:

This application is a continuation in part of my copending U.S. Patent Application entitled SPEED REDUCER AND METHOD FOR REDUCING BACKLASH, Serial No.          , filed February 1, 1982  and of my copending U.S. Patent Application entitled ORBITAL SPEED REDUCER WITH COMPENSATION COUPLING Serial No.          , filed of even date herewith.

Background of the Invention

Field of the Invention:

This invention relates to an orbital speed reducer having minimal backlash. More particularly it relates to a two stage speed reducer in which the stages are rotatably joined through a preloaded adjustable bearing that minimizes backlash and provides for adjustment to compensate for wear and thus provide a speed reducer suitable for applications requiring precision motion control.

Description of the Prior Art:

Speed reduction mechanisms making use of epicyclical movements with gear-like rotors having a perimeter defined by an epitrochoid curve have long been known. The magazine Design News in its August 18, 1961 issue describes a single-stage cycloidal cam that forms the basis of a speed reducing mechanism.  A similar structure is shown

-1-

in my U.S. Patent 3,998,112. Corresponding devices were previously known that made use of spur gears. U. S. Patent 2,250,259 to Foote, Jr. describes such a heliocentric unit. Other related mechanisms are described in U.S. Patents 3,429,393; 3,144,791; and 3,783,712.

The above-referenced patent application entitled SPEED REDUCER AND METHOD FOR REDUCING BACKLASH describes a structure in which the rollers engage a cycloidal cam with a predetermined compliant force. The structure and method described in that application substantially eliminates backlash arising from the speed reducing mechanism. Another source of backlash, however, can arise from the bearing structure joining the two stages of the speed reducer. In the above patent application and in the prior art devices, the two stages are joined by a conventional ring bearing that is not only expensive but permits a small amount of radial and axial movement between the two stages. These movements give rise to a small amount of backlash which may be acceptable for most speed reducing applications, but which is unacceptable in precision motion control applications.

## Summary of the Invention

The invention is embodied in a mechanism related to that disclosed in U.S. Patent 3,998,112 in which a series of rollers are equally spaced in a circle on a disk to perform operationally somewhat like an internal ring gear. Mounted for eccentric movement and simultaneously engaging each of the rollers is an orbital rotor having a perimeter defined by an epitrochoid curve with a number of lobes equal to one less than the number of rollers. The rotor is mounted for free rotation on an eccentric drive means keyed or otherwise coupled to a drive shaft. Rotation of the drive shaft causes the rotor to move orbitally and to rotate with a speed reduction equal to the reciprocal of the number of lobes on the rotor. A similar structure may serve as a second stage with a second orbital rotor driven by the first rotor and moved orbitally by the same eccentric. The second stage provides a further speed reduction to an output drive, connected to the disk supporting the rollers in the second stage, that is in alignment with the input drive shaft.

In accordance with the present invention, the two stages of the speed reducer, which is suitable for the most exacting motion control applications, are rotatably linked by a preloaded adjustable bearing that is resistant to axial, radial and bending loads. The bearing is economical to manufacture and is effective in the elimination of lost motion and backlash.

Brief Description of the Drawings

Figure 1 is a sectional view through a speed reducer embodying the invention;

Figure 2 is an end view along the line 2-2 of Figure 1; and

Figure 3 is a partial diagrammatic view illustrating another form of anti-friction bearing.

Brief Description of the Preferred Embodiment

As shown in the drawings, which are intended to be illustrative and are not necessarily drawn to corresponding scales, a stationary housing, generally indicated at 2, provides the main support for the speed reducer. Operating power is provided by a pancake motor 4 secured to the housing 2 by a number of mounting screws as indicated at 6. The drive shaft 8 of the motor 4 carries a compensation coupler, generally indicated at 12, comprising a sleeve 14 and a drive extension 16. The extension 16 operates in the manner of a crank arm and is arranged to provide rotary driving power to an off-center drive element 18 while preventing the transmission of radial reaction movements to the drive shaft 8. The axis of the drive shaft 8 is offset with respect to the centers of a rotor 24 and the circular eccentric drive element 18 thereby causing the rotor to follow an orbital path while being free to rotate about its own center. The

-4-

detailed structure for rotating the eccentric drive element is described in the above-referenced copending application entitled ORBITAL SPEED REDUCER WITH COMPENSATION COUPLING. For the purposes of the present description, it is only necessary to understand that the motor shaft 8 is arranged to rotate the eccentric drive element 18 that is mounted within a bearing 22 for free rotation about a point radially offset from the axis of the drive shaft 8.

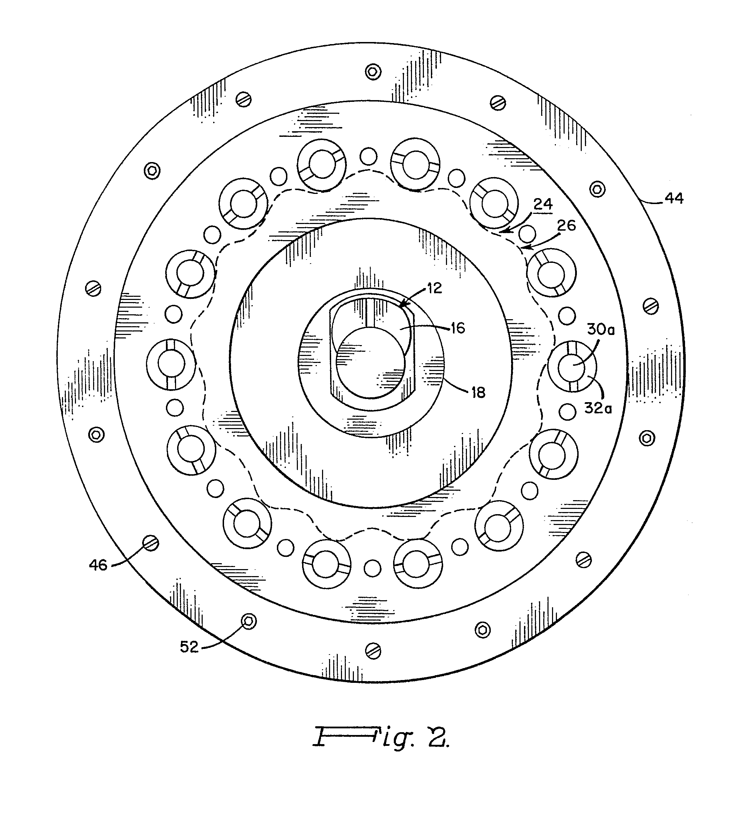

The two-stage orbital rotor, generally indicated at 24, is mounted for free rotation on the outside of the bearing 22. The outer circumference of the rotor 24 defines two epitrochoidal curves forming two sets of lobes as indicated by the broken lines at 26 in Figure 2. The first set comprises fourteen lobes that engage a series of fifteen rollers equally spaced on a circle about the periphery of the first set of lobes. Each of the rollers 28 is supported by a shaft 30 that is secured within a sleeve 32 mounted on the housing 2.

When the drive mechanism causes off-center rotation of the off-center drive element 18 causing the rotor 24 to follow an orbital path, the reaction with the rollers 28 (as more fully explained in my U.S. Patent 3,998,112) causes the rotor 24 to rotate at a speed equal to one-fourteenth of the speed of the drive shaft 8 and in the opposite direction.

A second set of thirteen lobes 26 formed on the right-hand section of the rotor 24, as viewed in Figure 1, engages a second set of fourteen rollers 28a each rotatably mounted on a shaft 30a secured within a sleeve 32a mounted in a circle on an output disk, generally indicated at 34. This second set of lobes is being moved orbitally and at the same time rotated in a direction opposite from the drive shaft 8. This movement of the rotor causes the output disk 34 to rotate with a further speed reduction, the overall unit providing a speed reduction of 196:1. The mechanism to be driven (not shown), such as a robot arm, is secured to the face of the output disk 34.

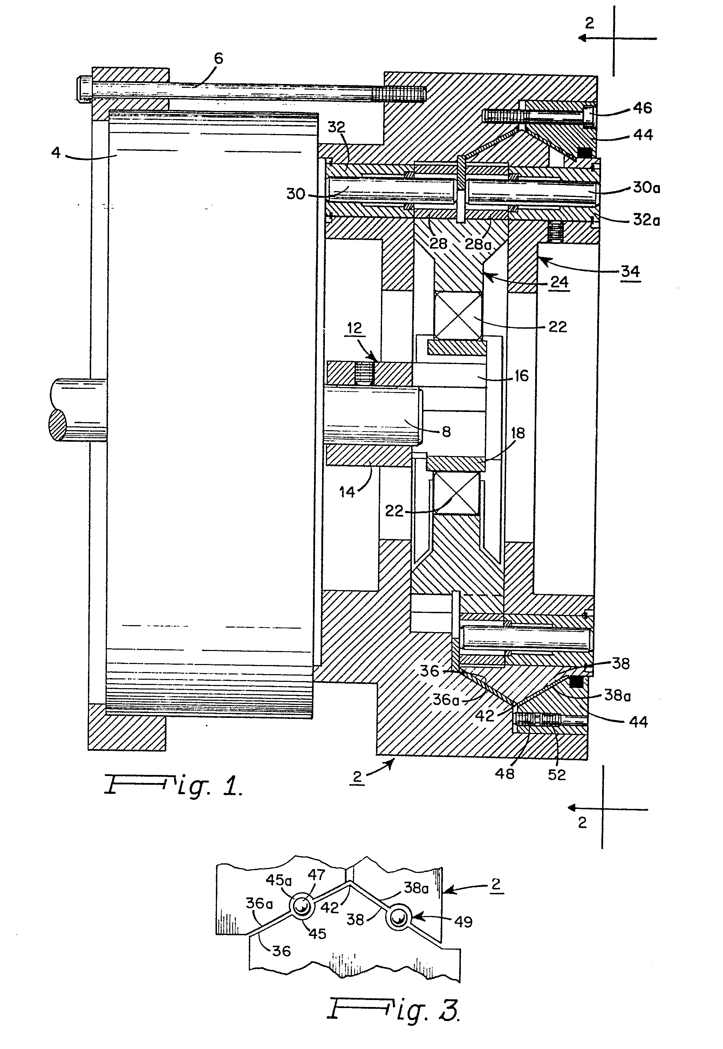

The circumference of the disk 34 is formed of two outwardly extending angular bearing surfaces 36 and 38 that in cross section form an obtuse angle and meet along a circular ridge line 42. The surfaces 36 and 38 are positioned respectively adjacent complimentary bearing surfaces 36a and 38a formed on the surrounding portion of the housing 2 and on the face of a pressure ring 44. To reduce the friction and wear between the output disk and the adjacent bearing surfaces, anti-friction means are interposed between the facing surfaces. For example, the surfaces 36 and 38 may be coated with teflon or some other low-friction wear-resistant material. An alternative arrangement is shown in Figure 3 in which the anti-friction means comprises a race formed by two opposing annular grooves 45 and 45a respectively in the surfaces 36 and 36a which carry a chain of ball bearings 47. A similar race with ball bearings is interposed between the facing surfaces 38 and 38a as indicated at 49.

The ring 44 must be adjusted to provide sufficient pressure to prevent radial and axial movement of the disk 34, but not great enough to cause excessive friction and wear. The ring 44 is secured in position by a series of screws 46 that pass through clearance openings in the ring 44 into threaded engagement with the housing 2. The minimum clearance between the surfaces 36 and 38 and the complimentary bearing surfaces 36a and 38a respectively is controlled by a series of jackscrews 48 in threaded engagement with the ring 44 which abut an adjacent surface of the housing 2. Each of the jackscrews 48 is adjusted to provide the desired clearance and then locked in position by a lock screw 52. The screws 46 are then tightened to provide the desired preload on the bearing surfaces and lock the ring 44 in position. Adjusted in this manner, a stiff bearing is provided that resists movement under axial, radial and bending loads. After continued use, any wear of the bearing surfaces is readily compensated by readjustment of the jackscrews 48.

-7-

Seven jackscrews 48, each with a lock screw 52, and an equal number of retaining screws 46 are positioned alternately around the face of the pressure ring 44.

From the foregoing it will be seen the speed reducer incorporating the preloaded bearing structure as described and claimed herein is well adapted to meet the ends and objects set forth herein and to eliminate backlash arising from radial or axial movement between the two stages of the speed reducer. The speed reducer is suitable for exacting motion control applications and has wide applicability as a robot joint. The particular structure described here is illustrative only and is subject to a variety of modifications, without departing from the scope of the present invention, to adapt it to each particular application and condition of use.

I CLAIM:

1. A speed reducer comprising

orbital rotor means having first and second sets of cycloidal lobes,

means driving said rotor means in an orbital path,

stationary housing means,

a first plurality of rollers supported by said housing means and engaging said first set of lobes,

output drive means,

a second plurality of rollers supported by said output drive means and engaging said second set of lobes,

said output drive means having a first circumferential bearing area having first and second outwardly sloping annular bearing surfaces meeting along a common circumferential line,

said housing means having a second circumferential bearing area with third and fourth annular bearing surfaces complimentary to and in face-to-face relationship with said first and second bearing surfaces, and

means applying and retaining a predetermined preload pressure between said first and second bearing areas.

2. A speed reducer as claimed in Claim 1 including anti-friction means interposed between said first and second bearing areas.

3.   A speed reducer as claimed in Claim 2 wherein
said anti-friction means is a layer of non-metallic
bearing material.

4.   A speed reducer as claimed in Claim 2 wherein
said anti-friction means is a layer of teflon.

5.   A speed reducer as claimed in Claim 2 wherein said
anti-friction means includes first and second sets of
ball bearings.

6.   A speed reducer as claimed in Claim 1 wherein
said housing includes
an adjustable pressure ring carrying said
second bearing surface,
adjustable stop means limiting the minimum
distance between said first and second bearing areas, and
means securing said pressure ring against the
force of said adjustable stop means thereby to maintain
minimum face-to-face distances between said bearing areas.

0087742

7.   A speed reducer comprising

first and second speed reducing stages,

driving means coupled to said first stage,

means responsive to the output from said first stage arranged to drive said second stage,

output drive means coupled to said second stage and rotatable with respect to said first stage,

said first stage including a first annular bearing surface having a V-shaped cross section,

said output drive means having a second annular bearing surface in face-to-face relationship with said first bearing surface and having a V-shaped cross section, and

clamping means for applying and retaining a predetermined preload pressure betweeen said first and second bearing surfaces.

8.   A speed reducer as claimed in Claim 7 including anti-friction means interposed between said frist and second bearing surfaces.

9.   A speed reducer as claimed in Claim 8 wherein said anti-friction means is a layer of non-metallic bearing material.

-11-

0087742

10. A speed reducer as claimed in Claim 9 wherein said layer is formed of teflon.

11. A speed reducer as claimed in Claim 7 wherein said first speed reducing stage includes

a fixed bearing alignment surface, and

wherein said clamping means includes

a pressure ring forming part of said first speed reducing stage and carrying thereon a portion of said first annular bearing surface,

a plurality of jackscrews in threaded engagement with said pressure ring and abutting said bearing alignment surface thereby to limit the maximum pressure that can be applied between said first and second bearing surfaces, and

a plurality of clamping means urging said pressure ring into engagement with an adjacent portion of said first speed reducing stage.

-12-

0087742

Fig. 2.

Fig. 1.

Fig. 3.